(19) Europäisches Patentamt / European Patent Office / Office européen des brevets

(11) **EP 4 567 475 B1**

(12) **FASCICULE DE BREVET EUROPEEN**

(45) Date de publication et mention
de la délivrance du brevet:
**27.05.2026 Bulletin 2026/22**

(21) Numéro de dépôt: **24217337.5**

(22) Date de dépôt: **04.12.2024**

(51) Classification Internationale des Brevets (IPC):
**G01T 3/00** *(2006.01)* **G01T 3/06** *(2006.01)*
**H01J 47/12** *(2006.01)*

(52) Classification Coopérative des Brevets (CPC):
**G01T 3/008; G01T 3/06; H01J 47/1227**

(54) **DÉTECTEUR NEUTRONIQUE COMPRENANT UNE CHAMBRE DE FISSION OPTIQUE À CAVITÉ OPTIQUE RÉFLÉCHISSANTE ET UNE TÊTE DE DÉTECTION COUPLÉE À LA CHAMBRE COMPRENANT UNE LENTILLE OPTIQUE ET UN COUPLEUR DE FIBRES OPTIQUES**

NEUTRONENDETEKTOR MIT REFLEKTIVER OPTISCHER HOHLRAUMFISSIONSKAMMER UND KAMMERGEKOPPELTEM DETEKTIONSKOPF MIT OPTISCHER LINSE UND EINEM OPTISCHEN FASERKOPPLER

NEUTRON DETECTOR COMPRISING REFLECTIVE OPTICAL CAVITY OPTICAL FISSION CHAMBER AND CHAMBER-COUPLED SENSOR HEAD COMPRISING OPTICAL LENS AND OPTICAL FIBER COUPLER

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **05.12.2023 FR 2313549**

(43) Date de publication de la demande:
**11.06.2025 Bulletin 2025/24**

(73) Titulaire: **Commissariat à l'Energie Atomique et aux Energies Alternatives
75015 Paris (FR)**

(72) Inventeurs:
• **POURADIER-DUTEIL, Marc
13115 SAINT PAUL LEZ DURANCE (FR)**
• **JAMMES, Christian
13115 SAINT PAUL LEZ DURANCE (FR)**

(74) Mandataire: **Ipsilon
12 Avenue d'Italie
75013 Paris (FR)**

(56) Documents cités:
**FR-A1- 3 125 135 JP-A- H09 218 270**

• **LAMOTTE M. ET AL: "Development and first use of an experimental device for fission-induced spectrometry applied to neutron flux monitoring", NUCLEAR INSTRUMENTS & METHODS IN PHYSICS RESEARCH. SECTION A, vol. 953, 1 February 2020 (2020-02-01), NL, pages 163236, XP055903450, ISSN: 0168-9002, DOI: 10.1016/j.nima.2019.163236**

## Description

### Domaine technique

La présente invention concerne le domaine de l'instrumentation, notamment des réacteurs nucléaires de fission et de fusion.

Elle concerne plus particulièrement des détecteurs de neutrons, du type chambre à fission et plus particulièrement, des chambres à fission dites optiques, c'est-à-dire des chambres à fission dont le fonctionnement consiste en la transduction du signal neutronique en un signal optique.

L'invention vise à proposer une telle chambre à fission optique dont le rapport signal sur bruit des mesures de flux neutronique est amélioré.

### Technique antérieure

La conduite d'un réacteur, qu'il soit de puissance ou de recherche, répond à des exigences fortes en termes de suivi de plusieurs paramètres de fonctionnement.

Parmi ceux-ci, la puissance thermique produite est un des paramètres clés. Celle-ci est directement corrélée au flux neutronique à proximité ou au sein de la cuve. Ainsi, une augmentation du flux de neutrons se traduit par une augmentation du niveau de puissance du réacteur.

Différentes techniques de mesure du flux neutronique existent, et sont regroupées sous le terme de détecteur de neutrons ou de détecteur neutronique.

Dans un réacteur nucléaire, plusieurs détecteurs neutroniques peuvent être implantés.

Ces détecteurs peuvent être classés en deux catégories : les détecteurs actifs, c'est-à-dire ceux dont la zone de détection requiert une tension de polarisation pour collecter et transmettre l'information associée à la détection d'un neutron, et les détecteurs passifs pour lesquels la zone de détection ne requiert aucune tension de polarisation.

Pour des mesures neutroniques au sein d'un réacteur nucléaire, les détecteurs neutroniques actifs habituellement utilisés sont les chambres à fissions ou les chambres à dépôts de bore qui fonctionnent classiquement sur le principe d'une transduction d'un flux neutronique en un signal électrique. Cette transduction électrique est réalisée au moyen d'une paire d'électrodes polarisées à quelques centaines de volts.

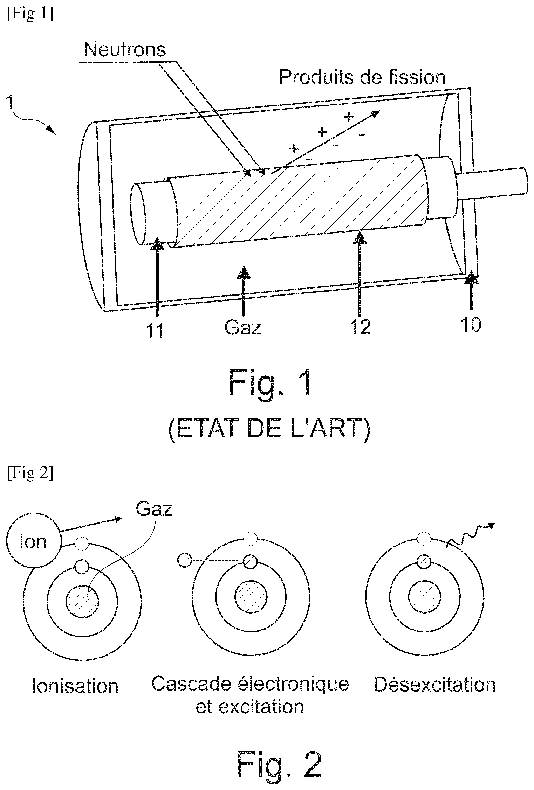

La figure 1 montre une chambre 1 à fission ou à dépôt de bore. Cette chambre 1 est délimitée par un cylindre creux 10, électriquement conducteur, fermé de manière étanche à ses extrémités, formant une cathode, sur l'axe central X duquel s'étend un cylindre 11 de moindre diamètre, formant une anode. La périphérie de l'anode 11 est revêtue d'un dépôt 12 d'un matériau interagissant fortement avec les neutrons comme de l'Uranium-235 ou du Bore-10. La chambre 1 est en outre remplie d'un gaz. L'interaction des neutrons avec le dépôt 12 libère des particules chargées lourdes dans le gaz de la chambre qui cèdent leur énergie dans le gaz. Le ralentissement de ces particules se fait par ionisation des atomes du gaz de remplissage de la chambre. Sous l'effet du champ électrique généré par la polarisation de la chambre, les électrons vont se déplacer en direction de l'anode 11, soit le potentiel positif de la chambre. Cette collection de charges génère un signal électrique dont on peut déduire la mesure du flux neutronique.

Dans ce type de chambre à fission 1, une situation accidentelle de perte de polarisation de la chambre entraîne donc une perte de la mesure du flux neutronique.

Également pour des mesures en réacteur, le seul détecteur passif utilisé actuellement dans l'industrie est un détecteur dénommé collectron, connu sous l'acronyme anglo-saxon SPND pour « Self Powered Neutron Detector ». Dans un collectron, un matériau émetteur d'électrons (désintégrations $\beta^-$) génère un courant transmis par un câble jusqu'à un appareil de mesure. Outre le fait que certains types de collectrons demandent une stabilisation de l'émetteur qui peut prendre jusqu'à 30 min, le transport de faibles courants sur de grande distance reste un enjeu. En effet, comme c'est le cas également pour les chambres à fissions, le transport du signal passe usuellement par des zones qui sont le siège potentiel de perturbations électromagnétiques (pompes, aimants, moteurs, etc...).

Pour obtenir un signal exploitable, un blindage électromagnétique de la ligne de transmission est nécessaire. Cela implique l'utilisation de câbles de haute immunité, volumineux, ce qui génère une contrainte d'encombrement.

Que ce soit pour des raisons de sûreté ou d'encombrement, les détecteurs neutroniques actuellement existants pour des mesures de flux neutronique, en particulier au sein de réacteur, ne sont donc pas satisfaisants.

Une nouvelle voie en rupture par rapport à celle de la transduction électrique a été proposée: voir par exemple les publications [1] à [5] et le brevet FR3125135B1. Ce principe consiste à réaliser une transduction optique en collectant les photons produits dans une chambre siège d'ionisations, désignée dans la suite du document par chambre d'ionisation.

Ces chambres à fissions appelées optiques (CFO) sont des détecteurs passifs qui permettent de s'affranchir des problèmes de dépendance à une alimentation électrique et d'encombrement des câbles électriques de transport du signal mentionnés plus haut.

Une CFO met donc en œuvre une transduction du signal neutronique en un signal optique. En effet, lors d'une ionisation d'un gaz par un ion lourd issu de la réaction entre un neutron et un matériau actif, tel qu'un matériau fissile (bore, uranium), une cascade électronique se produit et conduit à une excitation puis une désexcitation dans une large zone spectrale allant de l'ultraviolet à l'infrarouge moyen. Ce phénomène est schématisé en figure 2.

Cette luminescence engendrée est ensuite collectée au moyen d'une fibre optique adaptée à la tenue sous irradiation, limitant de fait la zone spectrale à exploiter. En effet, il a été montré que des fibres optiques en silice à cœur SiO2 puront une bonne tenue sous irradiation et atténuent très peu, typiquement quelques dB/km, un signal optique dont la longueur d'onde se situe dans le proche infrarouge, typiquement entre 800 et 1000 nm: voir [5].

La transduction du signal optique en un signal électrique est quant à elle réalisée hors cuve d'un réacteur nucléaire au moyen d'un ou plusieurs transducteurs du type photodiode, photomultiplicateur à base de silicium, voire caméras.

Ce(s) transducteur(s) ou module(s) de détection converti(ssen)t donc le signal lumineux en impulsion électrique de laquelle la mesure du flux neutronique est déduite. L'ensemble des composants d'un système de mesure par CFO est décrit ci-après.

Le tableau 1 ci-après établit une comparaison entre les chambres à fissions et les chambres à fissions optiques (CFO) actuelles, selon différents critères.

[Tableau 1]

| Types de détecteurs | Chambre à fissions | Chambre à fissions optique |
|---|---|---|
| Passifs | non | oui |
| Tenue en température | jusqu'à 600°C | jusqu'à 1000°C |
| Encombrement (diamètre du câble) | plusieurs dizaines de mm | centaines de $\mu$m |
| Immunité au bruit électromagnétique | selon diamètre du câble | oui |
| Précision de la mesure du flux neutronique | bonne | mauvaise |

Il ressort de ce tableau 1 que l'amélioration de la précision de la mesure du flux neutronique est un enjeu majeur pour les CFO (chambres à fission optiques).

Une caractéristique importante des CFO est son rapport signal sur bruit : plus ce rapport est grand, plus la mesure est précise.

Différentes études ont appréhendé les mécanismes responsables de l'intensité du signal et du bruit, pour des mesures de flux neutronique par une chambre à fission optique au sein d'un réacteur nucléaire.

En ce qui concerne l'intensité du signal, pour une géométrie de chambre à fission donnée, l'efficacité de collection des photons c'est-à-dire le nombre de photons collectés par la fibre par rapport au nombre de photons de désexcitation émis est donnée par l'équation 1 ci-après:

[Equation 1]

$$\eta vol = \Pi r^2 chambre \int_{-\theta max}^{\theta max} g(\theta)d\theta \times \int_0^{rfibre} 2\Pi r f(r)dr$$

dans laquelle :

- $r_{chambre}$ est le rayon interne de la chambre,
- $r_{fibre}$ est le rayon de la fibre,
- $\theta_{max}$ est l'angle maximal sous lequel la lumière peut être transmise dans la fibre,
- $g(\theta)$ et $f(r)$ désignent en $cm^2$ les distributions respectivement angulaires et radiales calculées sur la surface de vis-à-vis avec la fibre.

La fonction $f(r)$ étant pratiquement constante sur le rayon de la fibre, l'efficacité de collection est proportionnelle au carré du rayon de la fibre. Partant de ce principe, plusieurs auteurs ont suggéré d'augmenter le rayon de la fibre afin d'augmenter l'efficacité de collection et donc la précision d'une CFO : [6], [7].

De fait, le flux de rayonnements γ présent lors d'une mesure en réacteur rend cette solution d'augmentation du rayon de fibre insuffisante, le bruit étant lui-aussi proportionnel au rayon de la fibre.

En effet, à cause des ionisations induites dans la fibre par le rayonnement γ du réacteur, des électrons sont émis à une vitesse supérieure à c/n, c étant la célérité, c'est-à-dire la vitesse de propagation de l'onde électromagnétique, et n l'indice de réfraction de la fibre.

Le déplacement de ces électrons au sein de la fibre génère l'émission d'une onde électromagnétique visible, appelée lumière Tcherenkov. Cette lumière parasite vient se superposer au signal optique collecté, ce qui augmente le bruit, dégradant fortement le rapport signal sur bruit.

L'inventeur a réalisé des études et mesures qui ont montré que cette lumière Tcherenkov constitue la principale source de bruit dans une chambre à fission optique (CFO).

En effet, la formule de Franck-Tamm montre qu'en première approximation, l'intensité du rayonnement Tcherenkov varie selon l'équation 2 ci-dessous.

[Equation 2]

$$ITcherenkov \propto r^2 fibreLirrad$$

dans laquelle :

- $r_{fibre}$ est le diamètre de la fibre,
- $L_{irrad}$ est la longueur de fibre irradiée.

Lors d'une mesure en réacteur, pendant laquelle la fibre optique est soumise à des rayonnements ionisants, le signal et le bruit étant tous deux proportionnels au carré du rayon de la fibre, le rapport signal sur bruit ne dépend pas du rayon de la fibre.

Pour augmenter malgré tout le rapport signal sur bruit d'une chambre à fission optique, les auteurs de la publication [6] suggèrent d'utiliser un miroir réfléchissant pour les cavités optiques courtes et des lentilles pour des cavités optiques longues, afin de pallier la perte d'efficacité due à la diminution de l'angle solide.

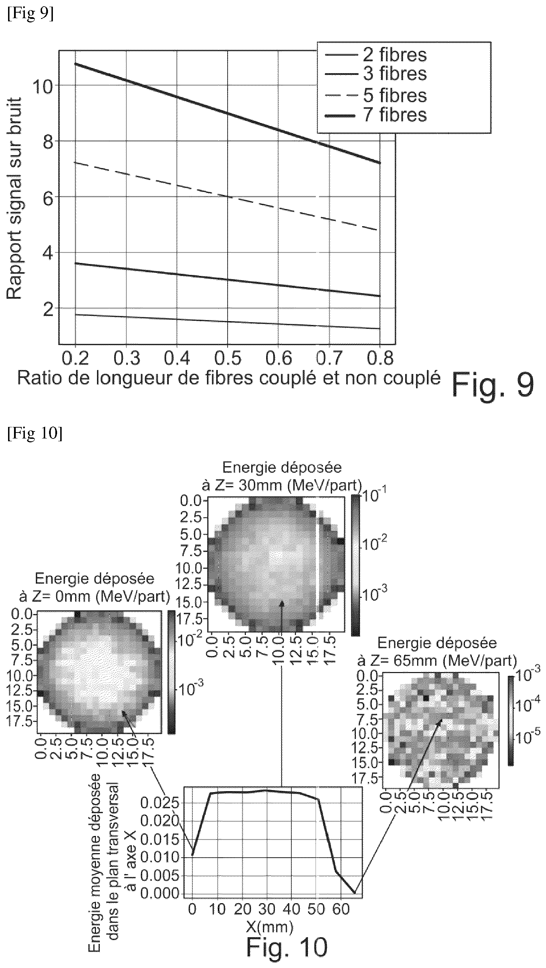

De plus, la figure 9 de [6] suggère d'utiliser des fibres optiques d'ouverture numérique plus importante pour augmenter l'efficacité de collection.

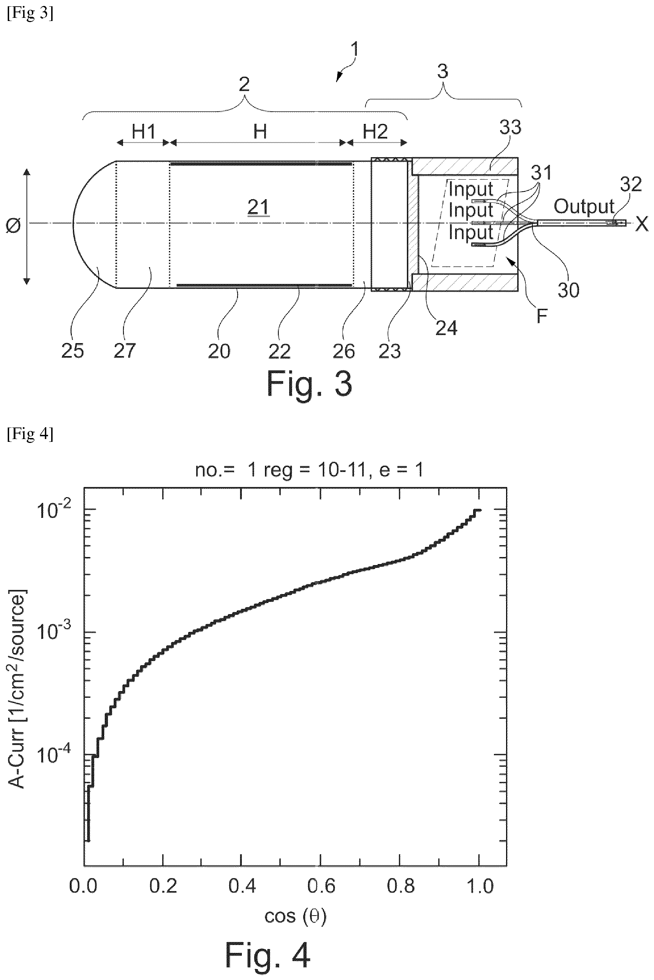

En considérant l'effet Tcherenkov dans l'approche d'optimisation du rapport signal sur bruit, l'inventeur considère que cette solution n'est pas pertinente. En effet, si l'on suit les suggestions de [6], la fraction de photons Tcherenkov guidés par la fibre optique est aussi plus importante : on pourra se référer à la figure 3 issue de la publication [8].

Par conséquent, les solutions proposées jusqu'alors pour améliorer la précision de la mesure du flux neutronique au moyen d'une chambre à fission optique (CFO) conduisent toutes à une impasse dans la mesure où elles augmentent certes l'intensité du signal mais aussi le bruit optique ou de Tcherenkov.

Il existe donc un besoin d'améliorer les chambres à fission optiques (CFO) permettant de réaliser une mesure du flux neutronique notamment au sein d'un réacteur nucléaire, afin soit d'augmenter l'intensité de leur signal de mesure sans augmenter le bruit, soit d'augmenter l'intensité du signal de mesure et de diminuer le bruit.

Le but de l'invention est de répondre au moins en partie à ce besoin.

**Exposé de l'invention**

Pour ce faire, l'invention a pour objet un détecteur neutronique comprenant :

- au moins une chambre d'ionisation étanche et à transduction optique, appelée chambre à fission optique (CFO) qui s'étend selon un axe longitudinal (X), comprenant :

  • un corps creux étanche délimitant intérieurement une cavité optique, et comprenant au moins une paroi interne revêtue au moins partiellement d'au moins une couche de matériau fissile, la cavité optique étant remplie d'un gaz, de préférence sous pression, apte à être ionisé par un ion issu de la réaction entre un neutron et le matériau fissile,
  • un hublot, agencé à l'une des extrémités longitudinales du corps creux et adapté pour rendre étanche la cavité optique,
  • une lentille optique, fixée en étant accolée au hublot ou réalisée intégralement avec le hublot, la lentille optique étant adaptée pour focaliser les photons reçus par le hublot,
  • un miroir, agencé à l'autre des extrémités longitudinales du corps creux, opposée à celle où est agencé le hublot, le miroir étant adapté pour réfléchir des photons vers le hublot,

- une tête de détection comprenant un coupleur à fibres optiques comprenant plusieurs fibres optiques en tant qu'entrées, agencées dans le plan focal de la lentille et une fibre optique, en tant que sortie, dans laquelle les signaux optiques reçus par les entrées sont sommés.

Avantageusement, la chambre à fission optique CFO est de forme axisymétrique d'axe central (X). Ainsi, le corps creux de la CFO est de préférence un cylindre, une sphère ou un cône.

Avantageusement, la densité surfacique du matériau fissile $\rho_{max}$ est inférieure ou égale à 2mg/cm$^2$. La surface du corps creux est d'autant plus grande que la masse du matériau fissile à déposer est grande. Pour maximiser l'énergie déposée dans le gaz, le diamètre du corps creux de la chambre est avantageusement au moins égal au parcours d'un fragment de fission. Or, cette valeur dépend du gaz de remplissage et de sa pression P. Ainsi, pour une masse de matière fissile et une pression du gaz au sein de la cavité optique données, les dimensions du corps creux R et H sont avantageusement celles déduites de l'équation 3 suivante :

[Equation 3]

$$\begin{cases} R = \dfrac{Range(P)}{2} \\ mfissile = 2\Pi RH\rho max \end{cases} \implies \begin{array}{l} R = \dfrac{Range(P)}{2} \\ H = \dfrac{mfissile}{\Pi\, Range\,(P)\rho max} \end{array}$$

dans laquelle :

- R représente la dimension transversale du corps creux, soit le rayon pour un cylindre,
- H représente la dimension axiale du corps creux, soit la longueur pour un cylindre,
- Range (P) est la distance que peut parcourir un fragment de fission dans un gaz donné à une pression P,
- $m_{fissile}$ est la masse de dépôt fissile,
- $\rho_{max}$ est la densité surfacique du matériau fissile.

Le matériau fissile est avantageusement choisi parmi le bore-10, le lithium-7, l'ensemble des isotopes de l'uranium 238, du plutonium et neptunium.

Le matériau constitutif du hublot est de préférence à base de silice. Un hublot en silice présente une grande efficacité de transmission ainsi qu'une bonne tenue au rayonnement. L'épaisseur e détermine leur tenue mécanique à la pression interne du gaz P par l'équation 4 suivante :

[Equation 4]

$$e = 1.732\sqrt{\frac{P}{ESiO2}}$$

dans laquelle $E_{SiO2}$ est le module d'Young de la silice et R le rayon du hublot.

Le rayon R du hublot est sensiblement égal à celui du corps creux.

Selon une variante avantageuse de réalisation, la lentille optique est une lentille de Fresnel. L'avantage d'utiliser une lentille de Fresnel est de diminuer la masse de matériau constitutif, notamment de la silice, qui doit être utilisée pour la fabrication et donc, de réduire l'intensité du rayonnement de la lumière Tcherenkov émis par les composants optiques que sont le hublot et la lentille. Soit une fibre optique d'ouverture numérique NA, le rayon de la lentille R est celui du hublot tandis que l'épaisseur de la lentille est une caractéristique donnée par le fabricant.

La focale f' de la lentille satisfait avantageusement l'équation 5 suivante :

[Equation 5]

$$arctan(\frac{R}{f'}) < arcsin\,(NA)$$

De préférence, le gaz de remplissage de la cavité optique est avantageusement un gaz noble, choisi parmi l'hélium, le néon, l'argon, le krypton, le xénon ou un mélange de ceux-ci.

La cavité optique est de préférence sous pression, typiquement sous quelques bars.

Selon un mode de réalisation avantageux, le détecteur comprend au moins un espaceur agencé entre le hublot et le corps creux et/ou entre le miroir et le corps creux. Chaque espaceur joue le rôle d'une entretoise physique entre le dépôt de matière fissile et l'un des composants optiques (miroir ou hublot) pour éviter l'obscurcissement prématuré de ce dernier dû à l'impact des fragments de fissions.

La dimension axiale de l'espaceur est de préférence supérieure ou égale au parcours dans le gaz de la cavité optique du fragment de fission léger (FFL) ou ion de portée maximale dans le gaz. Les FFL sont émis suite à l'interaction d'un neutron avec un atome du dépôt fissile. Deux fragments de fissions sont émis par fission mais seul le léger est considéré pour les études de dimensionnement. Pour une fission d'uranium 235, le FFL est assimilé à une particule de masse atomique A = 95 avec une énergie cinétique initiale E = 100 MeV.

En effet, le parcours du FFL est toujours le plus important par rapport au parcours des autres produits de fission. Pour augmenter l'efficacité de collection, les surfaces internes des espaceurs sont de préférence polies pour permettre la réflexion de la lumière.

Le rayon de l'espaceur est égal à celui du corps creux de la CFO.

Le tableau 2 ci-dessous donne le parcours du FFL dans une cavité optique remplie de différents gaz nobles sous une pression de 1 et 5 bar.

[Tableau 2]

| Gaz | Hauteur H1 ou H2 d'un espaceur (mm) | |
|---|---|---|
| Pression (bar) | 1 bar | 5 bar |
| Hélium | 128 | 25,1 |
| Néon | 42,7 | 9,45 |
| Argon | 23 | 4,62 |
| Krypton | 17,2 | 3,47 |

Il ressort de ce tableau 2 qu'il est préférable d'utiliser un gaz de numéro atomique élevé pour diminuer la hauteur de l'espaceur et améliorer l'efficacité de collection de la chambre CFO.

Selon une variante de construction avantageuse, la tête de détection est fixée, de préférence par vissage, sur le corps creux de la chambre. Le détecteur neutronique constitue un seul objet qui peut être compact et aisément manipulé.

Ainsi, l'invention consiste essentiellement en un détecteur neutronique à chambre à fission optique (CFO) étanche à une cavité optique dont le fonctionnement est basé sur la transduction optique et qui intègre à une de ses extrémités longitudinales, un hublot et une lentille optique comme interface optique et, à l'autre extrémité, un miroir pour réfléchir les photons qui prennent une direction opposée à celle du hublot.

Un coupleur à fibres optiques est positionné judicieusement dans le plan focal de la lentille de sorte à augmenter, dès la sortie de la lentille, la surface de collection du signal émis sans augmenter durablement le volume de fibres optiques sous irradiation, qui est une source de bruit par la lumière Tcherenkov.

Le dépôt de la couche réfléchissante formant le miroir est de préférence adapté à la longueur d'onde de mesure. En effet, les coefficients de réflexion lumineuse dépendent de la longueur d'onde du photon incident. De plus, le matériau du substrat le plus courant, le NBK- 7 doit être évité. En effet, celui-ci contient du B10 qui, par réaction $(n,\alpha)$, amènerait une détérioration prématurée du miroir : [9]. Pour la couche réfléchissante, les matériaux comme l'argent et l'or sont à privilégier pour leur réflectance importante et constante sur une grande gamme de longueurs d'ondes et notamment dans l'infrarouge proche.

Le hublot et la lentille optique sont solidarisés en étant accolés ou réalisés intégralement sous la forme d'une pièce monobloc, afin que ces deux composants optiques supportent ensemble la contrainte mécanique. Ainsi, l'épaisseur de la lentille permet de lui faire porter une partie de la contrainte mécanique et d'affiner le hublot. La masse de silice irradiée peut donc être réduite, ce qui diminue le bruit par la lumière Tcherenkov qui sera émis dans ces composants optiques.

Un détecteur de neutrons selon l'invention avec des dimensions miniaturisées peut être adapté afin de résister aux environnements à haute température et à fort niveau d'irradiation tels que ceux trouvés à l'intérieur d'un réacteur nucléaire en fonctionnement.

Au final, un détecteur selon l'invention permet d'obtenir un excellent rapport signal sur bruit de mesure de flux neutronique.

Les applications de l'invention sont nombreuses parmi lesquelles on peut citer :

-  la mesure en ligne du flux neutronique dans un réacteur nucléaire ;

- la caractérisation et le suivi du flux neutronique non seulement dans un réacteur nucléaire, que ce soit un réacteur expérimental ou un réacteur électrogène ;

- la localisation d'éléments combustibles fondus pendant ou après un accident grave (perte de refroidissement ou encore transitoire de puissance);

- la localisation de bouchons de conditionnement, en particulier en plutonium colloïdal, dans des procédés de traitements chimiques.

- la mesure neutronique sur faisceaux de neutrons pour la stabilité du faisceau ou bien de la mesure de temps de vol sur ces mêmes lignes.

D'autres avantages et caractéristiques ressortiront mieux à la lecture de la description détaillée, faite à titre illustratif et non limitatif, en référence aux figures suivantes.

**Brève description des dessins**

[Fig 1] la figure 1 est une vue schématique en coupe longitudinale d'un détecteur neutronique de type chambre à fission selon l'état de l'art.

[Fig 2] la figure 2 est une vue schématique illustrant le principe d'une luminescence engendrée par l'ionisation d'un gaz par une particule ionisante, dénommée le plus souvent ion lourd, issue de la réaction entre un neutron et un matériau actif.

[Fig 3] la figure 3 est une vue en coupe longitudinale d'un détecteur neutronique à chambre à fission optique (CFO) et coupleur à fibres optiques selon l'invention.

[Fig 4] la figure 4 illustre sous forme d'une courbe le résultat du calcul de la distribution angulaire g($\theta$) des photons traversant la surface du hublot d'un détecteur neutronique selon l'invention, dimensionné avec les composants comme sur la figure 3.

[Fig 5] la figure 5 est une vue en coupe longitudinale d'un détecteur neutronique à chambre à fission optique (CFO) à titre d'exemple comparatif.

[Fig 6] la figure 6 illustre sous forme d'une courbe le résultat de calculs de la distribution angulaire g($\theta$) des photons traversant la surface du hublot d'un détecteur neutronique à titre d'exemple comparatif, dimensionné avec les composants comme sur la figure 5.

[Fig 7] la figure 7 est une vue de face d'un caisson d'irradiation montrant différentes positions avantageuses d'implantation d'un détecteur neutronique à chambre à fission optique selon l'invention lors d'irradiations en réacteur nucléaire.

[Fig 8] la figure 8 illustre, sous forme d'une courbe tridimensionnelle, l'efficacité de collection obtenue en fonction de la focale de la lentille optique et de la distance entre la lentille optique et la fibre en tant que sortie du signal transmis par la lentille.

[Fig 9] la figure 8 illustre, sous forme de droites, le rapport signal sur bruit obtenu par un coupleur à fibres optiques, en fonction du nombre de fibres optiques du coupleur et du ratio de longueur de fibres couplées et non couplées, dans un détecteur neutronique selon l'invention.

[Fig 10] la figure 10 illustre la répartition et le niveau d'énergie du signal déposée dans le détecteur en fonction de sa position le long de l'axe longitudinal X du détecteur neutronique selon les dimensions du dispositif figure 5.

**Description détaillée**

Les figures 1 et 2 ont déjà été décrites en préambule. Elles ne seront donc pas détaillées par la suite.

On a représenté en figure 3 un détecteur neutronique 1 selon l'invention.

Il comprend tout d'abord une chambre d'ionisation 2 étanche et à transduction optique, appelée chambre à fission optique (CFO) qui s'étend autour d'un axe central (X).

Cette chambre CFO 2 comprend un cylindre creux 20 étanche, de longueur H et de diamètre ø égal à 2R, délimitant intérieurement une cavité optique 21.

La paroi interne 22 du corps est revêtue d'une couche de matériau fissile tels que l'uranium 235, l'uranium 238, le bore-10.

La cavité optique 21 est remplie d'au moins un gaz noble, de préférence sous pression P, apte à être ionisé par un ion issu de la réaction entre un neutron et le matériau fissile. Le gaz peut être choisi parmi l'hélium, le néon, l'argon, le krypton, le xénon ou un mélange de ceux-ci.

Un hublot 23 est agencé à l'une des extrémités longitudinales du corps creux 20 et adapté pour rendre étanche la cavité optique. En outre, un espaceur 26 est agencé entre le hublot 23 et le corps creux 20 pour éviter l'obscurcissement prématuré du hublot 23 dû à l'impact des fragments de fissions.

Une lentille optique 24, de préférence une lentille de Fresnel est fixée en étant accolée ou réalisée intégralement avec le hublot, la lentille optique étant adaptée pour focaliser les photons reçus par le hublot 23.

Un miroir 25 est, agencé à l'autre des extrémités longitudinales du corps creux, opposée à celle où est agencé le hublot. Ce miroir 25 est adapté pour réfléchir des photons vers le hublot. En outre, un espaceur 27 est agencé entre le miroir 25 et le corps creux 20 pour éviter l'obscurcissement prématuré du miroir 25 dû à l'impact des fragments de fissions. L'espaceur 26 et l'espaceur 27 présentent un diamètre ø égal à celui du cylindre creux 20. Ils peuvent être identiques entre eux, avec une dimension axiale H1 égale à H2.

Le détecteur neutronique 1 comprend en outre une tête de détection 3.

Cette tête 3 comprend un coupleur à fibres optiques 30 à plusieurs fibres optiques 31 en tant qu'entrées, agencées dans le plan focal F de la lentille 24 et une seule fibre optique 32, en tant que sortie, dans laquelle les signaux optiques reçus par les entrées sont sommés.

L'inventeur a réalisé différents dimensionnements et calculs, notamment à l'aide du logiciel d'acronyme anglo-saxon PHITS (« Particle and Heavy Ion Transport code System »). Ce logiciel est un code de simulation de transport Monte Carlo à N particules, qui est une plateforme logicielle de simulation numérique utilisant la méthode de Monte-Carlo pour modéliser des processus de physique nucléaire. Ce logiciel PHITS à usage général a été développé dans le cadre d'une collaboration entre l'Agence japonaise de l'énergie atomique (JAEA) et plusieurs instituts du monde entier.

Pour valider la géométrie avec les différents composants, notamment ceux optiques, du détecteur neutronique 1 selon l'invention, tel que montré à la figure 3, l'inventeur a comparé cette géométrie à celle d'un détecteur 1' à chambre à fission optique qu'il utilise en tant que prototype au sein du laboratoire.

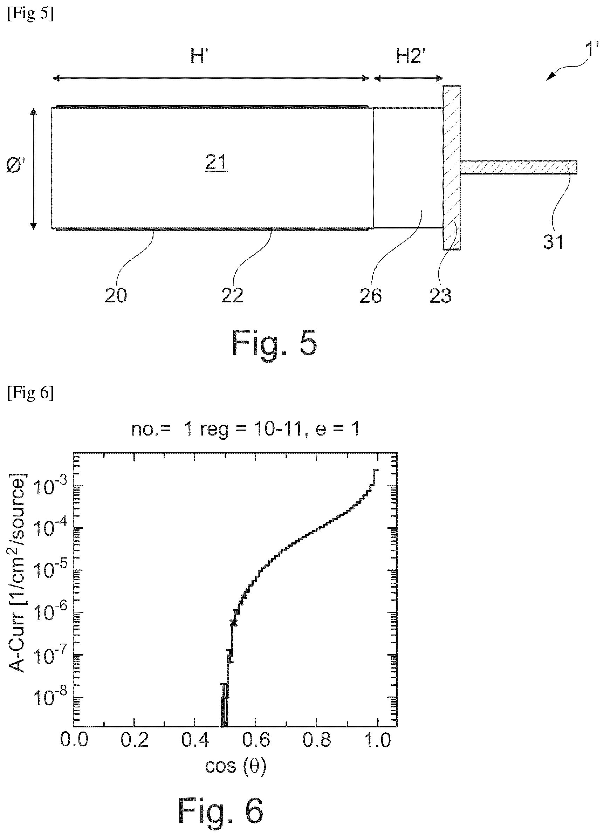

Un tel détecteur 1' est montré schématiquement à la figure 5 : il ne comprend aucun miroir ni lentille optique, ni coupleur à fibres optiques. En effet, ce détecteur 1' comprend uniquement un hublot 23 à distance du corps cylindrique creux 20 délimitant la chambre 21 par un espaceur 26.

Une fibre optique 31 unique est directement accolée contre le hublot 23 selon l'axe X.

Pour quantifier l'impact d'un système de focalisation optique, les distributions angulaires et radiales à la surface du hublot 23 ont été calculées dans les géométries respectivement du détecteur neutronique 1 selon la figure 3 et à titre d'exemple comparatif le détecteur neutronique 1' selon la figure 5.

Les graphes des figures 4 et 6 montrent les résultats des calculs de la distribution angulaire g(θ) des photons traversant la surface du hublot 23 respectivement pour le détecteur neutronique 1 et le détecteur neutronique 1'. Ces calculs ont été réalisés par le logiciel PHITS.

On précise que pour ces deux détecteurs 1, 1', la source de lumière est modélisée comme étant uniforme, volumique et isotrope.

Les dimensions des détecteurs 1, 1' qui ont été considérées sont indiquées dans le tableau 3 ci-dessous.

[Tableau 3]

| Détecteur neutronique | Selon l'invention (figure 3) | Exemple comparatif (figure 5) |
|---|---|---|
| Hauteur corps creux 20 | H = 12,6 mm | H' = 55 mm |
| Hauteur espaceur 26, 27 | H1 = H2 = 5,1 mm | H2'= 11,5 mm |
| Diamètre corps creux 20 | Ø = 12,6 mm | Ø' = 7,2 mm |

A la lecture des résultats, on constate qu'en modifiant la géométrie du corps creux 20 de la chambre CFO et en ajoutant un miroir 25, la proportion de photons traversant la surface du hublot ($P_{hublot}$) augmente d'un facteur 25. Cette valeur est sous-estimée puisqu'elle ne prend pas en compte le gain apporté par les réflexions des photons sur les parois polies.

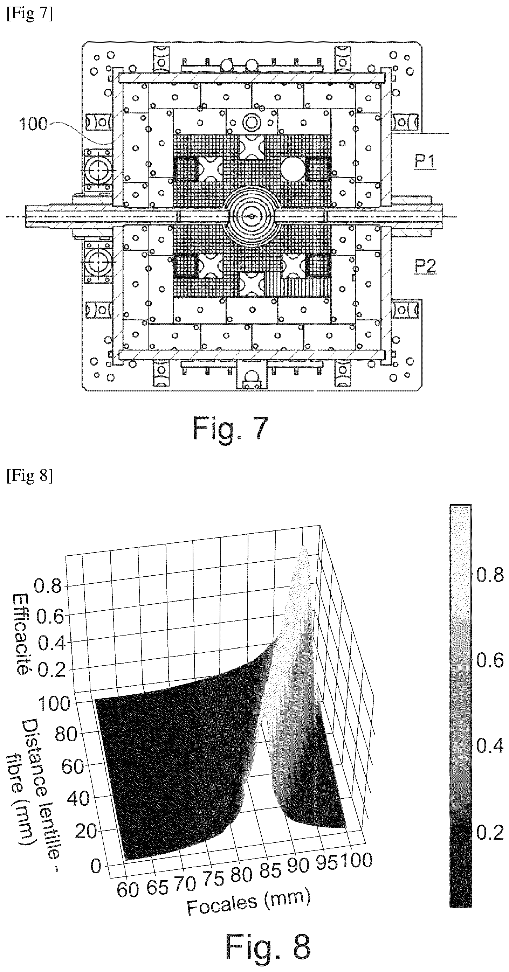

La figure 7 illustre l'implantation avantageuse dans deux positions P1, P2 de deux détecteurs neutroniques 1 comme selon la figure 3, qui sont collés au réflecteur 100 à l'intérieur d'un caisson d'irradiation en réacteur nucléaire.

Connaissant les distributions radiales et angulaires des photons impactant le hublot 23, il est possible grâce à l'optique matricielle, de déduire les mêmes distributions en sortie de hublot et donc, l'efficacité de collection résultant. Ce modèle suppose que les conditions de Gauss sont respectées, c'est-à-dire que l'angle des rayons incident est faible. C'est le cas de plus de 60% des photons dans le cas d'un détecteur 1 à chambre CFO avec les dimensions optimisées indiquées ci-avant.

L'inventeur a comparé trois détecteurs neutroniques dont les composants optiques différent, à savoir :

- un détecteur neutronique 1' à simple hublot d'étanchéité comme selon la figure 5,
- un détecteur neutronique 1 selon l'invention avec un hublot 23 et une lentille optique 24 épaisse accolés comme selon la figure 3, et
- un détecteur neutronique 1 selon l'invention avec un hublot 23 et une lentille de Fresnel 24 accolés comme selon la figure 3.

Les matrices de transfert de chacun de ces trois détecteurs sont présentées dans le tableau 3 ci-dessous.

Dans ce tableau 4 :

- L est la distance entre le(s) composant(s) optique(s) (hublot avec ou sans lentille optique) et la fibre optique,

- R est le rayon de courbure de la lentille épaisse,

- f' la focale de la lentille de Fresnel,

- t est l'épaisseur du hublot ainsi que celui de la lentille épaisse choisi égal à 2 mm,

- $n_1$ est l'indice de réfraction de l'air,

- $n_2$ l'indice de réfraction de la silice,

- $\theta$ et r sont tirés aléatoirement dans les distributions calculées par le logiciel PHITS.

[Tableau 4]

| Composant(s) optique(s) | Matrice de passage optique |
|---|---|
| Hublot seul | $$\begin{pmatrix} r_2 \\ \theta_2 \end{pmatrix} = \begin{pmatrix} 1 & L \\ 0 & 1 \end{pmatrix} \begin{pmatrix} 1 & t \\ 0 & 1 \end{pmatrix} \begin{pmatrix} 1 & 0 \\ 0 & \frac{n_1}{n_2} \end{pmatrix} \begin{pmatrix} r_1 \\ \theta_1 \end{pmatrix}$$ |
| Hublot avec lentille optique épaisse | $$\begin{pmatrix} r_2 \\ \theta_2 \end{pmatrix} = \begin{pmatrix} 1 & L \\ 0 & 1 \end{pmatrix} \begin{pmatrix} 1 & 0 \\ \frac{n_2-n_1}{Rn_1} & \frac{n_2}{n_1} \end{pmatrix} \begin{pmatrix} 1 & t \\ 0 & 1 \end{pmatrix} \begin{pmatrix} 1 & 0 \\ \frac{n_1-n_2}{Rn_2} & \frac{n_1}{n_2} \end{pmatrix} \begin{pmatrix} r_1 \\ \theta_1 \end{pmatrix}$$ |
| Hublot avec lentille de Fresnel | $$\begin{pmatrix} r_2 \\ \theta_2 \end{pmatrix} = \begin{pmatrix} 1 & L \\ 0 & 1 \end{pmatrix} \begin{pmatrix} 1 & 0 \\ \frac{-1}{f'} & 1 \end{pmatrix} \begin{pmatrix} 1 & t \\ 0 & 1 \end{pmatrix} \begin{pmatrix} 1 & 0 \\ 0 & \frac{n_1}{n_2} \end{pmatrix} \begin{pmatrix} r_1 \\ \theta_1 \end{pmatrix}$$ |

La simulation par calculs indique que l'efficacité de collection pour un hublot simple est plus faible qu'avec un système optique combiné hublot-lentille optique, ce qui est cohérent étant donné que son cône d'acceptance n'occupe qu'une faible partie du volume d'émission.

Les calculs indiquent une augmentation de l'efficacité de collection d'un facteur égal à 1,01 pour un système optique combiné hublot-lentille optique épaisse et égal à 25 pour un combiné hublot-lentille de Fresnel.

Avec un système optique combiné hublot-lentille optique, la valeur de la focale et la distance lentille- fibre sont variables.

Les profils de sensibilité de l'efficacité montrent bien que, pour le système optique combiné hublot-lentille, le maximum d'efficacité est atteint lorsque la fibre optique est placée au foyer image F de la lentille.

En revanche, en utilisant une lentille non amincie, l'efficacité de collection chute de 40%.

La figure 8 illustre l'efficacité de collection pour un système optique combiné hublot-lentille de Fresnel.

L'inventeur a vérifié l'effet du coupleur à fibres optiques 30 et son optimisation selon les deux paramètres que sont le nombre de fibres optiques à coupler et le ratio x de la longueur de fibres optiques après couplage sur la longueur de fibres optiques avant couplage.

Compte tenu des rayons de courbures des fibres optiques qui ne doivent pas être trop importants, l'inventeur considère que x varie entre 0,2 et 0,8.

En comparant un détecteur neutronique selon l'invention c'est-à-dire avec coupleur à fibres optiques, à un détecteur sans coupleur, l'inventeur a calculé les variations de signal $\delta s$ et de bruit $\delta b$ décrites dans les équations 6 comme suit :

[Equation 6]

$$\frac{\delta b}{b} = N(1-x) + x - 1 \quad \frac{\delta s}{s} = N - 1$$

dans lesquelles N représente le nombre de fibres optiques en tant qu'entrées du coupleur.

La variation du rapport signal sur bruit engendrée par un coupleur à fibres optiques conforme à l'invention est montrée à la figure 9.

Ainsi, la simulation par les calculs permet de justifier l'intérêt de la présence des différents composants optiques et coupleur à fibres optiques dans un détecteur neutronique 1 à chambre à fissions optique CFO puisqu'ils permettent de maximiser l'intensité lumineuse de l'image de la source optique.

La figure 10 montre les distributions axiales et radiales de l'énergie d'une source optique à travers un détecteur neutronique 1 selon l'invention.

L'allure de cette source optique dépend de plusieurs paramètres, comme la géométrie de la cavité optique, son gaz de remplissage, la pression du gaz de remplissage et la nature du matériau fissile, choisi parmi l'uranium 235, le bore-10, le lithium-7....

La complexité de la source optique combinée aux composants optiques du détecteur 1 rend le calcul de l'image de la source impossible. L'image de la source dans le plan de détection F étant inconnue, les multiples fibres optiques positionnées permettent de se placer aux endroits où l'image de la source est la plus lumineuse. Ce degré de liberté supplémentaire permet d'optimiser encore la collecte de la lumière et donc d'améliorer le rapport signal sur bruit.

Le détecteur neutronique 1 à chambre à fission optique qui vient d'être décrit possède une efficacité de collection du signal et un rapport signal sur bruit des dizaines de fois plus élevé par rapport à un détecteur à chambre à fission optique actuellement existant.

Comme cela ressort de ce qui précède, cette amélioration vient du choix des composants optiques judicieusement rajoutés (miroir, hublot et lentille optique), du coupleur à fibres optiques, de l'optimisation de leur géométrie, ainsi que de paramètres tels que le nombre de fibres optiques en entrées du coupleur et le ratio des longueurs de fibres couplées et non couplées.

Il va de soi que les résultats issus des analyses préliminaires qui ont été réalisées avec le logiciel PHITS peuvent être trouvés en utilisant des codes de calculs d'optique spécialisés.

D'autres variantes et améliorations peuvent être envisagées sans pour autant sortir du cadre de l'invention.

Liste des références citées

[1] : M. Lamotte, G. De Izarra, C. Jammes, « Heavy-ions induced scintillation experiments, » J. Instrum., 14 (09) (2019), p. C09024, https://doi.org/10.1088/1748-0221/14/09/C09024

[2]: M. Lamotte, G. De Izarra, C. Jammes, « Development and first use of an experimental device for fission-induced spectrometry applied to neutron flux monitoring», Nucl. Instrum. Methods Phys. Res. A953 (2020), p. 163236, https://doi.org/10.1016/j.nima.2019.163236.

[3]: M. Lamotte, G. De Izarra, C. Jammes, «Design and irradiation test of an innovative optical ionization chamber technology», Nucl. Instrum. Methods Phys. Res. A968 (2020), p.163945, https://doi.org/10.1016j.ni

ma.2020.163945.

[4]: M. Lamotte, G. De Izarra, C. Jammes, SCENA: «A simulation tool for radiation-induced gas scintillation», Nucl. Instrum. Methods Phys. Res. A982 (2020), p. 164576, https://doi.org/10.1016/j.nima.2020.164576.

[5]: Cheymol G., Long H., Villard J.-F., Brichard B., «High level gamma and neutron irradiation of silica optical fibers in CEA OSIRIS nuclear reactor», IEEE Trans. Nucl. Sci., 55 (4) (2008), pp. 2252-2258.

[6]: Goburnov, B., "Perspectives d'utilisation de convertisseurs optiques nucléaires pour l'enregistrement de flux de photons dans les réacteurs nucléaires." Centre nucléaire fédéral Russe. (2015).

[7]: Lamotte, M., "Etude du signal optique des chambres à fission et évaluation de son exploitation pour un système de mesure neutronique d'un réacteur de génération IV." Thèse de Doctorat de l'Université de Grenoble. (2021).

[8]: Brichard, B. "Fiber-optic gamma-flux monitoring in a fission reactor by means of Cerenkov radiation". Measuring Science Technology - vol 18, 3257 - 3262.

[9]: Wirtenson, R. H. "Radiation Induced Darkening of the Optical Element in the Startracker camera." Technical report of Lawrence Livermore National Laboratory. (2007).

**Revendications**

1. Détecteur neutronique (1) comprenant :

   - au moins une chambre d'ionisation étanche (2) et à transduction optique, appelée chambre à fission optique (CFO) qui s'étend selon un axe longitudinal (X), comprenant :

     • un corps creux (20) étanche délimitant intérieurement une cavité optique (21), et comprenant au moins une paroi interne (22) revêtue au moins partiellement d'au moins une couche de matériau fissile, la cavité optique étant remplie d'un gaz, de préférence sous pression, apte à être ionisé par un ion issu de la réaction entre un neutron et le matériau fissile,
     • un hublot (23), agencé à l'une des extrémités longitudinales du corps creux et adapté pour rendre étanche la cavité optique,
     • une lentille optique (24), fixée en étant accolée au hublot ou réalisée intégralement avec le hublot, la lentille optique étant adaptée pour focaliser les photons reçus par le hublot,
     • un miroir (25), agencé à l'autre des extrémités longitudinales du corps creux, opposée à celle où est agencé le hublot, le miroir étant adapté pour réfléchir des photons vers le hublot,

   - une tête de détection (3) comprenant un coupleur à fibres optiques (30) comprenant plusieurs fibres optiques (31) en tant qu'entrées, agencées dans le plan focal de la lentille et une fibre optique (32), en tant que sortie, dans laquelle les signaux optiques reçus par les entrées sont sommés.

2. Détecteur neutronique (1) selon la revendication 1, la chambre à fission optique CFO étant de forme axisymétrique d'axe central (X) correspondant à l'axe d'extension longitudinal de la chambre d'ionisation.

3. Détecteur neutronique (1) selon la revendication 2, le corps creux de la CFO étant un cylindre, une sphère ou un cône.

4. Détecteur neutronique (1) selon l'une des revendications précédentes, la densité surfacique du matériau fissile $\rho_{max}$ étant inférieure ou égale à 2 mg/cm$^2$.

5. Détecteur neutronique (1) selon l'une des revendications précédentes, le matériau fissile étant choisi parmi le bore-10, le lithium-7, les isotopes de l'uranium 238, du plutonium et neptunium.

6. Détecteur neutronique (1) selon l'une des revendications précédentes, le gaz étant choisi parmi l'hélium, le néon, l'argon, le krypton, le xénon ou un mélange de ceux-ci.

7. Détecteur neutronique (1) selon l'une des revendications précédentes, le matériau constitutif du hublot étant à base de silice.

8. Détecteur neutronique (1) selon l'une des revendications précédentes, la lentille optique étant une lentille de Fresnel.

9. Détecteur neutronique (1) selon l'une des revendications précédentes, comprenant au moins un espaceur agencé entre le hublot et le corps creux et/ou au moins un espaceur agencé entre le miroir et le corps creux.

10. Détecteur neutronique (1) selon la revendication 9, la dimension axiale de l'espaceur étant supérieure ou égale au parcours dans le gaz de la cavité optique du fragment de fission léger (FFL).

11. Détecteur neutronique (1) selon l'une des revendications précédentes, la tête de détection étant fixée, de préférence par vissage, sur le corps creux de la chambre.

12. Utilisation d'un dispositif de détection neutronique selon l'une des revendications 1 à 11, pour la caractérisation et le suivi du flux neutronique dans un réacteur nucléaire.

13. Utilisation d'un dispositif de détection neutronique selon l'une des revendications 1 à 11, pour la localisation d'éléments combustibles fondus pendant ou après un accident grave, telle qu'une perte de refroidissement ou transitoire de puissance.

14. Utilisation d'un dispositif de détection neutronique selon l'une des revendications 1 à 11, pour la localisation de bouchons de conditionnement, en particulier en plutonium colloïdal, dans des procédés de traitements chimiques.

**Patentansprüche**

1. Neutronendetektor (1), umfassend:

- mindestens eine dichte Ionisationskammer (2) mit optischer Transduktion, optische Spaltkammer (CFO) genannt, die sich entlang einer Längsachse (X) erstreckt, umfassend:

• einen dichten Hohlkörper (20), der innen eine optische Kavität (21) begrenzt und mindestens eine Innenwand (22) umfasst, die mindestens teilweise mit mindestens einer Schicht aus spaltbarem Material beschichtet ist, wobei die optische Kavität mit einem Gas, vorzugsweise unter Druck, gefüllt ist, das geeignet ist, durch ein aus der Reaktion zwischen einem Neutron und dem spaltbaren Material hervorgegangenes Ion ionisiert zu werden,
• ein Schauglas (23), das an einem der Längsenden des Hohlkörpers angeordnet ist und dazu angepasst ist, die optische Kavität abzudichten,
• eine optische Linse (24), die fixiert ist, indem sie an das Schauglas angesetzt ist, oder einstückig mit dem Schauglas ausgeführt ist, wobei die optische Linse dazu angepasst ist, die von dem Schauglas empfangenen Photonen zu fokussieren,
• einen Spiegel (25), der an dem anderen der Längsenden des Hohlkörpers angeordnet ist, das zu dem, an dem das Schauglas angeordnet ist, entgegengesetzt ist, wobei der Spiegel dazu angepasst ist, Photonen zu dem Schauglas hin zu reflektieren,

- einen Detektionskopf (3), der einen Glasfaserkoppler (30) umfasst, der mehrere Glasfasern (31) als Eingänge umfasst, die in der Brennebene der Linse angeordnet sind, und eine Glasfaser (32) als Ausgang, in der die von den Eingängen empfangenen optischen Signale summiert werden.

2. Neutronendetektor (1) nach Anspruch 1, wobei die optische Spaltkammer CFO von achssymmetrischer Form mit einer Mittelachse (X) ist, die der Längserstreckungsachse der Ionisationskammer entspricht.

3. Neutronendetektor (1) nach Anspruch 2, wobei der Hohlkörper der CFO ein Zylinder, eine Kugel oder ein Kegel ist.

4. Neutronendetektor (1) nach einem der vorhergehenden Ansprüche, wobei die Oberflächendichte des spaltbaren Materials $\rho_{max}$ kleiner oder gleich 2 mg/cm$^2$ ist.

5. Neutronendetektor (1) nach einem der vorhergehenden Ansprüche, wobei das spaltbare Material aus Bor-10, Lithium-7, den Isotopen von Uran-238, Plutonium und Neptunium gewählt ist.

6.  Neutronendetektor (1) nach einem der vorhergehenden Ansprüche, wobei das Gas aus Helium, Neon, Argon, Krypton, Xenon oder einem Gemisch davon gewählt ist.

7.  Neutronendetektor (1) nach einem der vorhergehenden Ansprüche, wobei das Material, aus dem das Schauglas besteht, auf Kieselsäure basiert.

8.  Neutronendetektor (1) nach einem der vorhergehenden Ansprüche, wobei die optische Linse eine Fresnel-Linse ist.

9.  Neutronendetektor (1) nach einem der vorhergehenden Ansprüche, umfassend mindestens einen Abstandhalter, der zwischen dem Schauglas und dem Hohlkörper angeordnet ist, und/oder mindestens einen Abstandhalter, der zwischen dem Spiegel und dem Hohlkörper angeordnet ist.

10. Neutronendetektor (1) nach Anspruch 9, wobei das axiale Maß des Abstandhalters größer oder gleich dem Weg in dem Gas der optischen Kavität des leichten Spaltfragments (FFL) ist.

11. Neutronendetektor (1) nach einem der vorhergehenden Ansprüche, wobei der Detektionskopf, vorzugsweise durch Verschraubung, an dem Hohlkörper der Kammer befestigt ist.

12. Verwendung einer Vorrichtung zur Neutronendetektion nach einem der Ansprüche 1 bis 11 zur Charakterisierung und Überwachung des Neutronenflusses in einem Nuklearreaktor.

13. Verwendung einer Vorrichtung zur Neutronendetektion nach einem der Ansprüche 1 bis 11 zur Lokalisierung von Brennelementen, die während oder nach einem schweren Störfall wie einem Kühlungsausfall oder einer Leistungstransiente geschmolzen sind.

14. Verwendung einer Vorrichtung zur Neutronendetektion nach einem der Ansprüche 1 bis 11 zur Lokalisierung von Aufbereitungspfropfen, insbesondere aus kolloidalem Plutonium, in chemischen Behandlungsverfahren.

## Claims

1.  Neutron detector (1) comprising:

    - at least one seal-tight ionization chamber (2) in which optical transduction occurs, which chamber is called an OFC, acronym of optical fission chamber, each chamber extending along a longitudinal axis (X) and comprising:

        • a seal-tight hollow body (20) bounding internally an optical cavity (21) and comprising at least one inner wall (22) coated at least partially with at least one layer of fissile material, the optical cavity being filled with a gas, which is preferably under pressure, and which is capable of being ionized by an ion resulting from a reaction between a neutron and the fissile material,
        • a window (23), arranged at one of the longitudinal ends of the hollow body and configured to seal the optical cavity,
        • an optical lens (24), fastened by bonding to or integrally formed with the window, the optical lens being configured to focus photons received by the window,
        • a mirror (25), arranged at the other of the longitudinal ends of the hollow body, which end is opposite the longitudinal end where the window is arranged, the mirror being configured to reflect photons towards the window,

        - a detection head (3) comprising a fibre-optic coupler (30) comprising a plurality of optical fibres (31) by way of inputs, said optical fibres being arranged in the focal plane of the lens, and one optical fibre (32) by way of output, in which optical fibre the optical signals received by the inputs are summed.

2.  Neutron detector (1) according to Claim 1, the OFC being axisymmetric in shape and having a central axis (X) corresponding to the axis of longitudinal extension of the ionization chamber.

3.  Neutron detector (1) according to Claim 2, the hollow body of the OFC being a cylinder, sphere or cone.

4. Neutron detector (1) according to one of the preceding claims, the surface density pmax of the fissile material being less than or equal to 2 mg/cm$^2$.

5. Neutron detector (1) according to one of the preceding claims, the fissile material being selected from boron-10, lithium-7, isotopes of uranium-238, plutonium and neptunium.

6. Neutron detector (1) according to one of the preceding claims, the gas being selected from helium, neon, argon, krypton, xenon or a mixture thereof.

7. Neutron detector (1) according to one of the preceding claims, the material from which the window is made being based on silica.

8. Neutron detector (1) according to one of the preceding claims, the optical lens being a Fresnel lens.

9. Neutron detector (1) according to one of the preceding claims, comprising at least one spacer arranged between the window and the hollow body and/or at least one spacer arranged between the mirror and the hollow body.

10. Neutron detector (1) according to Claim 9, the axial dimension of the spacer being greater than or equal to the path length through the gas of the optical cavity of the light fission fragment (LFF).

11. Neutron detector (1) according to one of the preceding claims, the detection head being fastened, and preferably screwed, to the hollow body of the chamber.

12. Use of a device for detecting neutrons according to one of Claims 1 to 11 to characterize and track neutron flux in a nuclear reactor.

13. Use of a device for detecting neutrons according to one of Claims 1 to 11, to locate melted fuel elements during or after a serious incident, such as a loss of cooling or a temporary loss of power.

14. Use of a device for detecting neutrons according to one of Claims 1 to 11 to locate, in particular colloidal plutonium, encapsulation stoppers in chemical treatment processes.

[Fig 1]

Neutrons

Produits de fission

1

11    Gaz    12    10

# Fig. 1
## (ETAT DE L'ART)

[Fig 2]

Gaz

Ion

Ionisation    Cascade électronique    Désexcitation
              et excitation

# Fig. 2

[Fig 3]

Fig. 3

[Fig 4]

no.= 1 reg = 10-11, e = 1

Fig. 4

[Fig 5]

Fig. 5

[Fig 6]

no.= 1 reg = 10-11, e = 1

Fig. 6

[Fig 7]

Fig. 7

[Fig 8]

Fig. 8

[Fig 9]

Fig. 9

[Fig 10]

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3125135 B1

**Littérature non-brevet citée dans la description**

- **M. LAMOTTE** ; **G. DE IZARRA** ; **C. JAMMES**. Heavy-ions induced scintillation experiments. *J. Instrum.*, 2019, vol. 14 (09), C09024, https://doi.org/10.1088/1748-0221/14/09/C09024
- **M. LAMOTTE** ; **G. DE IZARRA** ; **C. JAMMES**. Development and first use of an experimental device for fission-induced spectrometry applied to neutron flux monitoring. *Nucl. Instrum. Methods Phys. Res.*, 2020, vol. A953, 163236, https://doi.org/10.1016/j.nima.2019.163236
- **M. LAMOTTE** ; **G. DE IZARRA** ; **C. JAMMES**. Design and irradiation test of an innovative optical ionization chamber technology. *Nucl. Instrum. Methods Phys. Res.*, 2020, vol. A968, 163945, https://doi.org/10.1016j.nima.2020.163945
- **M. LAMOTTE** ; **G. DE IZARRA** ; **C. JAMMES**. SCENA: «A simulation tool for radiation-induced gas scintillation». *Nucl. Instrum. Methods Phys. Res.*, 2020, vol. A982, 164576, https://doi.org/10.1016/j.nima.2020.164576
- **CHEYMOL G.** ; **LONG H.** ; **VILLARD J.-F.** ; **BRICHARD B.** High level gamma and neutron irradiation of silica optical fibers in CEA OSIRIS nuclear reactor. *IEEE Trans. Nucl. Sci.*, 2008, vol. 55 (4), 2252-2258
- **GOBURNOV, B.** Perspectives d'utilisation de convertisseurs optiques nucléaires pour l'enregistrement de flux de photons dans les réacteurs nucléaires.. *Centre nucléaire fédéral Russe*, 2015
- **LAMOTTE, M.** Etude du signal optique des chambres à fission et évaluation de son exploitation pour un système de mesure neutronique d'un réacteur de génération IV.. *Thèse de Doctorat de l'Université de Grenoble*, 2021
- **BRICHARD, B.** Fiber-optic gamma-flux monitoring in a fission reactor by means of Cerenkov radiation. *Measuring Science Technology*, vol. 18, 3257-3262
- **WIRTENSON, R. H.** Radiation Induced Darkening of the Optical Element in the Startracker camera.. *Technical report of Lawrence Livermore National Laboratory.*, 2007